# EUROPEAN PATENT APPLICATION

(11) **EP 3 106 361 A1**
(43) Date of publication of application: **21.12.2016**
(21) Application number: 15172324.4
(22) Date of filing: 16.06.2015
(51) Int. Cl.: B60W 20/00, B60K 6/48, B60W 10/08, B60W 30/20

(54) **HYBRID COMBUSTION ENGINE**

(71) Applicant: Continental Automotive GmbH, 30165 Hannover (DE)
(72) Inventor: Paulus, Theodor, 700590 Iasi (RO)

(57) **Abstract**

A system for reducing torsional oscillations in a vehicle drive train of a hybrid vehicle is described. The vehicle drive train is coupled to a combustion engine and an electrical engine. The combustion engine generates a first series of torque pulses and the electrical engine generates a second series of torque pulses. The torque pulses of the combustion engine and the torque pulses of the electrical engine are applied to the drive train and are directed in the same sense of direction. As if the numbers of cylinders of the piston engine was increased, at least one torque pulse generated by the electrical engine is generated chronologically between two subsequent torque pulses of the combustion engine. The electrical engine can support or perform the compressing phase of at least one of the cylinders.

## Description

The present invention relates to a system for reducing torsional oscillations in a vehicle drive train of a hybrid vehicle, a method for reducing torsional oscillations in a vehicle drive train, and a vehicle comprising a system for reducing torsional oscillations in a vehicle drive train of a hybrid vehicle.

Environmental issues and the desire for reducing the costs of mobility lead to new engine concepts. For the reduction of carbon dioxide emissions, concepts comprising electrical engines are on the rise. However, range issues and the limited capacities of batteries let hybrid concepts become appealing. Benefits of both types of engines could be combined. This may allow for the combustion engine to be of smaller size.

Thus, combustion engines are still subject to an ongoing optimization process. To increase effectiveness, i.e. the specific fuel consumption for the power generated, generally a low number of cylinders and a low rotational speed, in particular an optimum rotational speed, is strived after. It is well known however that a reduction of the number of cylinders is detrimental to a smooth operation of a piston engine. Powerful vibrations in low frequencies may occur, hence having a strong impact on mechanical parts of the drive train. As the lifespan of the drive train may suffer and the comfort of passengers may be negatively affected, vibrations are dealt with by introducing flywheels for instance.

However, reducing the number of cylinders below three, for example, may require the flywheels to be designed rather large, in addition to issues when starting the engine.

It may be desirable to have a hybrid engine with optimized fuel consumption by a low number of cylinders with reduced vibration issues.

The object of the present invention is solved by the subject-matter of the independent claims, wherein further embodiments are incorporated in the dependent claims and the following description of aspects and embodiments.

The following detailed description is merely exemplary in nature and is not intended to limit application and uses. Furthermore, there is no intention to be bound by any theory presented in the preceding background or summary or the following detailed description.

A first aspect of the invention relates to a system in a vehicle drive train of a hybrid vehicle. The vehicle drive train is coupled to a combustion engine (in particular an internal combustion engine) and an electrical engine, wherein the combustion engine is configured to generate a first series of torque pulses and the electrical engine is configured to generate a second series of torque pulses. The torque pulses of the combustion engine and the torque pulses of the electrical engine are applied to the drive train and are directed in the same sense of direction. Furthermore, at least one torque pulse generated by the electrical engine is generated chronologically between two subsequent torque pulses of the combustion engine. This may reduce torsional oscillations in the drive train.

The term "hybrid vehicle" implies two types of engines in one vehicle. In this case, a combustion engine and an electrical engine are integrated in one vehicle.

A vehicle may refer to automobiles, i.e. passenger cars, but also to trucks, buses, tractors, tanks, construction machines, motorbikes, and the like.

The electrical engine as well as the combustion engine is coupled to the vehicle drive train. That means that the vehicle drive train is basically the torque transmitting element between one or more engines and eventually the tires. The drive train may, inter alia, comprise one or more clutches, a gearbox, sensors for e.g. measuring torque or revolution per minute, and means for lubrication.

The combustion engine is configured to generate a first series of torque pulses. The torque pulses refer to a positive contribution to torque for the desired propulsion of the vehicle. It is temporally limited, but repeatedly occurring. In the intervals between the pulses, the torque generated by the combustion engine may be low (compared to the peaks of the pulses), it may be zero, or it may be even negative, i.e. opposite to the above mentioned direction of contribution to the desired vehicle propulsion. For instance, if the combustion engine is a piston engine, the torque output of one cylinder in a four-stroke engine is negative in three of four cycles due to friction and suction of fresh air and fuel. Only one, i.e. the forth power stroke contributes torque to be used for propulsion.

The electrical engine is also configured to generate a series of pulses. The above mentioned description of the intervals between the pulses may apply to the electrical engine, too. That is, the torque pulses are repeated and the torque generated by the electrical engine may be zero or negative between the torque pulses. In other words, the term "torque pulses" refers to a positive torque, i.e. in a sense of direction contributing to the desired direction of propulsion. This does not affect the potentially negative torque intervals, e.g. when the electrical engine is in a generator mode during the positive torque pulses of the combustion engine, for instance. In other words, at a specific point during the operation of the two engines, at least one of these two engines may contribute a negative torque to the resulting torque of both engines while the other engine may, at the same time, contribute a positive torque. Preferably, the resulting torque, i.e. the sum of the negative and positive torque is equal to or greater than 0.

The aforesaid time intervals of, potentially slightly negative, torque (which rather refers to friction than to a "generated" torque) do not contradict the fact that both, the combustion engine and the electrical engine are configured to contribute torque basically in the same sense of direction. In particular, the torque pulses of the electrical engine and the torque pulses of the combustion engine are oriented in the same sense of direction. In other words, the peaks of the respective torque pulses have the same sign.

The torque pulses of the electrical engine may be generated in such a way that they appear between the torque pulses of the combustion engine. Thus, a torque pulse of the combustion engine does in general not temporally coincide with a torque pulse of the electrical engine, but that a torque pulse of the combustion engine is followed by a torque pulse of the electrical engine. It is also possible that subsequently several torque pulses are generated by the electrical engine after one torque pulse of the combustion engine. Hence, between two torque pulses of the combustion engine there may be one or more torque pulses of the electrical engine.

Reducing the number of cylinders in a piston engine or lowering the frequency of the power stroke leads to a lower frequent torque generation, and thus to an excitation of torsional oscillations in the drive train of lower frequency. Both approaches, reducing the number of cylinders and lowering the RPM, i.e. power stroke of an engine, are utilized as a strategy for reducing specific fuel consumption of a combustion engine. Hence, the torque peaks of a such configured engine may be higher compared to other piston engines, in addition to the lower frequency the torque peaks appear with.

Applying the torque pulses of the electrical engine chronologically between the torque pulses of the combustion engine allows for the value, i.e. the amplitude, of the torque peaks of the combustion engine to be reduced. The reason for this is that the integral over time of the torque peaks is generated by both engines. To contribute to the angular momentum of the drive train, the integral of torque over time is considered. Thus, the integral of torque over time, i.e. the resulting angular momentum, emerges from the portion of the pulses of the electrical engine and the pulses of the combustion engine.

The above explained strategy may not only facilitate smaller torque pulses of the combustion engine, but also increase the frequency of the torque pulses acting on the drive train. Thus, a combustion engine with a virtually higher number of cylinders can be resembled, exploiting and approximating the benefits of a combustion engine with a high number of cylinders. To this end, it is sought to increase the number of torque pulses and decrease the peak value of torque pulses. The spectrum of frequency excitation in the drive train is thus shifted to higher frequencies while achieving a smoother excitation by torque pulses, even if a very low number of cylinders is used in a piston engine for instance.

It may be an advantageous effect of the invention to virtually double or multiply the number of torque pulses applied to a drive train of a vehicle, thus increasing the frequency of torque pulses, which allows for the decrease of the peaks of the torque pulses. Both means have positive effects on the vibration level in the drive train, thus improving passenger comfort and lifespan of the drive train.

According to an exemplary embodiment of the present invention, a shape of the torque pulses generated by the electrical engine corresponds to a shape of the torque pulses generated by the combustion engine.

For a steady state and smooth operation of the vehicle it may be desirable to resemble the shape of the torque pulses of the combustion engine with the electrical engine. By resembling the shape it can be meant to produce a shape which is identical to the one of the torque pulse of the combustion engine. However, it can also refer to the integral of one torque pulse generated by the combustion engine, thus providing the same transfer of angular momentum to the drive train of the vehicle as by the combustion engine.

According to another exemplary embodiment of the present invention, a shape of the torque pulses generated by the electrical engine corresponds to a shape of the torque pulses generated by the combustion engine augmented by a tuning signal.

Additionally to replicating the torque shape generated by the combustion engine, tuning signals can be produced by the electrical engine. A tuning signal can be applied to compensate for negative torque intervals of the combustion engine, i.e. for example friction effects, or generally to contribute to a smooth operation of the vehicle drive train. It may also be sought to improve the level of efficiency of the electrical engine or the overall efficiency of the propulsion system. Optimizations in any direction by augmenting the torque pulse of the electrical engine by tuning signals may be possible.

According to another exemplary embodiment of the present invention, all torque pulses generated by the electrical engine and generated by the combustion engine are equidistantly distributed.

This means that the timing of e.g. peaks of all intervals is constant. The pulses of both, the combustion and the electrical engine, are distributed over time such that the pulses follow in constant time steps, and are repeated as if controlled by a clockwork. Not only the peaks of intervals can be used for a description of distribution of the pulses, but also for instance a balanced mean of a pulse (e.g. integrating and normalizing the shape of a pulse), or the beginning of a pulse, or other measurements. All descriptions have in common to point out the uniform distribution of pulses for a rhythmic appearance of torque pulses.

According to another exemplary embodiment of the present invention, the system as described above and in the following further comprises a module clutch, wherein the module clutch is arranged between the combustion engine and the electrical engine.

The module clutch connects two members of the drive train in order to optionally engage or disengage torque transmission between the members. In particular, torque transmission between the electrical engine and the combustion engine can be interrupted. A possible demand for disengaging torque transmission, i.e. to cut off the combustion engine from the torque connection to the drive train, would be when the brakes of the vehicle are applied and the electrical engines comprises an alternator mode for recovering energy to e.g. a battery or a capacitor. It may also be possible for the combustion engine to be shut down in certain situations. In these cases, the combustion engine could be disconnected from the drive train to avoid additional friction by the combustion engine. The module clutch is for instance a friction disk.

According to another exemplary embodiment of the present invention, the module clutch is torsional stiff.

This may especially be important to exploit the operating principle of the hybrid propulsion system with the torque pulses applied subsequently. "Torsional stiff" means that the engines are coupled such that torque is transmitted without noteworthy losses between the combustion engine and the electrical engine.

According to another exemplary embodiment of the present invention, the system as described above and in the following further comprises a torsional oscillation reducer, wherein the torsional oscillation reducer is arranged at a shaft of the drive train behind the electrical engine and the combustion engine.

A torsional oscillation reducer may be a vibration absorber, a vibration damper, or simply a mass which smoothens torque pulses by its significant moment of inertia. A vibration absorber comprises a separate mass-spring-damping system whose resonance frequency is designed to lie close to a considered excitation frequency, thus annihilating a maximum of vibration energy by friction (and finally heat). A vibration damper aims directly at damping some movement by (viscous) friction of a member of the drive train. Combinations of the above mentioned means of reducing vibrations may be possible, too. The term "behind" refers to a section of the drive train which lies outside an imaginary group with the elements combustion engine and electrical engine. In other words, the torsional oscillation reducer is not located between the combustion engine and the electrical engine, but at a section of the drive train, after which the e.g. torsional stiffly coupled engines are placed. This is consistent with the embodiment of the invention, wherein the electrical engine and the combustion engine are coupled by a torsional stiff connection, e.g. a stiff module clutch. In this embodiment, the electrical engine may act as flywheel for a combustion engine, e.g. a piston engine with a low number of cylinders. A low number of cylinders may refer to e.g. not more than three, or even two or one cylinder. In this embodiment, issues when starting or shutting down the combustion engine may be avoided. The above said is especially true, if the oscillation reducer is a vibration decoupling element, e.g. a flywheel with two disks providing sufficient moment of inertia, wherein the flywheels are connected by a torsional spring. In this case, a torsional stiff coupling is no longer present. However, it may be precisely desired to connect the combustion engine and the electrical engine with a torsional stiff element in order to apply effectively the pulses of both engines to the drive train and to exploit the benefits of this (virtually increasing the number of cylinders of a piston engine). Hence, the torsional oscillation reducer is located behind the engines.

According to another exemplary embodiment of the present invention, the torsional oscillation reducer is a two mass flywheel.

A two mass flywheel comprises two masses e.g. two disks to exploit their moment of inertia. Furthermore, the disks are coupled by a spring. Thus, a dynamic second order system ensures optimized frequency transmission on the drive train, in particular for minimizing the transmission of torsional oscillations.

According to another exemplary embodiment of the present invention, the combustion engine is a piston engine.

Often, piston engines are used for vehicles. Among a myriad of kinds of piston engines, Otto engine types or Diesel engines are commonly provided for the use in vehicles.

According to another exemplary embodiment of the present invention, the piston engine has one, or two, or three cylinders. However, the piston engine can also have four, five, six or more cylinders.

Reducing the number of cylinders increases rough operation of the engine. This is the reason why most piston engines in vehicles offer at least four cylinders. The piston engine however in this embodiment may have fewer cylinders than four, in particular one cylinder, or two, or three cylinders. This may reduce the specific fuel consumption significantly.

In an embodiment, the electrical engine is adapted to generate torque in order to perform or at least support the compression phase in the cylinder in a steady state of the combustion engine. The electrical machine supports or performs the compression phase after a starting phase of the combustion engine has been completed, in other words in a steady state of the running combustion engine. In particular, the electrical engine can support the combustion engine or at least one cylinder thereof during the compression phase of the combustion engine or the at least one cylinder, respectively. As an example, the electrical engine can be adapted to provide at least 40 %, at least 50%, at least 70 %, at least 90% or at least 95% of the torque necessary to perform or complete the compression phase of the cylinder or the combustion engine, respectively. In order to perform this task, the electrical engine is designed with a nominal or maximal torque sufficient for completing or performing the compression phase moment. In addition, a driver, a control device or a timer of the electrical engine can be provided adapted to control the power and/or timing of the electrical engine in order to generate the torque for performing the compression phase as given above. It should be noted, that the system inherently is provided with a moment of inertia, which, together with the torque generated by the electrical engine, supports or performs the compression phase. Further, a torque provided during a working stroke of another cylinder can support the torque required to perform the compression phase.

According to another exemplary embodiment of the present invention, the torque pulses generated by the combustion engine are proportioned to the drive train and the electrical engine, and wherein the electrical engine generates electricity from these torque pulses.

The electrical engine can be configured to comprise an alternator mode. While physically being configured as alternator in the first place, the electrical engine may have a connection and a respective transistor control system to charge a capacitor or a battery or the like. Thus, for further reducing the impact of a short but intense torque pulse generated by the combustion engine, the electrical engine may consume at least a part of this torque pulse for generating electricity to be saved and supply this energy back to the drive train in cycles of the one or more cylinders, in which cycles for example fresh air is sucked into the cylinder, or the combustion gases are pushed out of the cylinder, i.e. in cycles in which the cylinder consumes energy rather than supplying energy to the drive train. In particular if the module clutch between the combustion engine and the electrical engine is closed, the electrical engine can be configured to provide torque to the combustion engine, in particular in cycles of the combustion engine, which cycles do not produce torque pulses for contributing to the desired motion of the vehicle. Those cycles rather consume energy by friction and compression losses. The electrical machine generates torque in order to perform the compression phase in the cylinder. The electrical engine can thus avoid stall of the combustion engine, although no or a small flywheel is present to keep the combustion engine with a low number of cylinders running. This is particularly true for a four-cycle combustion engine with one or two cylinders, wherein cycles exist (seen over the entire engine), which consume energy, e.g. the exhaust cycle, or the cycle in which fresh air is sucked into one cylinder. In other words, the electrical engine can be configured to ensure the continuous motion of the combustion engine during cycles of the combustion engine, which cycles consume energy and thus torque rather than producing positive torque. The electrical engine can, as explained above, use the energy which was saved during cycles of the combustion engine which generated positive torque pulses. In this case, the electrical engine has alternating states between alternator-mode and motor-mode.

According to another exemplary embodiment of the present invention, the first series of torque pulses has the same frequency as the second series of torque pulses, such that an excitation frequency acting on the drive train corresponds to an excitation frequency generated by a combustion engine with twice the number of cylinders as the combustion engine of the hybrid vehicle.

In this embodiment, the number of cylinders virtually doubles. For example, if a two-cylinder Diesel engine is provided for the hybrid vehicle, a torque pulse generated by the electrical engine between two torque pulses of the Diesel engine appears as torsional excitation to the drive train as if the Diesel engine was provided with four cylinders, thus ensuring a smooth operation.

A second aspect of the invention relates to a method for reducing torsional oscillations in a vehicle drive train, comprising the steps of:
- Identifying the frequency and/or shape of at least one torque pulse of the combustion engine;
- Operating the electrical engine in pulses, such that at least one pulse of the electrical engine is allocated chronologically between two torque pulses of the combustion engine.

According to another exemplary embodiment of the present invention, the method as described above further comprises the steps of:
- Resembling the shape of the torque pulse of the combustion engine with the shape of the torque pulse of the electrical engine; and
- Adding a tuning signal to the torque pulse of the electrical engine.

Another aspect of the invention relates to a vehicle comprising a system as described above and/or below.

These and other aspects of the invention will become apparent from and elucidated with reference to the embodiments hereinafter.

Exemplary embodiments of the present invention will now be described in the following, with reference to the following drawings.
Fig. 1 shows a drive train according to an exemplary embodiment of the present invention.
Fig. 2 shows a time history of the torque pulses of both engines according to an exemplary embodiment of the present invention.
Fig. 3 shows a time history of the torque pulses of both engines according to another exemplary embodiment of the present invention.
Fig. 4 shows a time history of the torque pulses of both engines according to another exemplary embodiment of the present invention.
Fig. 5 shows a method according to an exemplary embodiment of the present invention.
Fig. 6 shows a vehicle according to an exemplary embodiment of the present invention.
Fig. 7 shows a schematic illustration of the torque shapes of two engines.

The illustration in the drawings is schematically. In different drawings, similar or identical elements are provided with the same reference numerals.

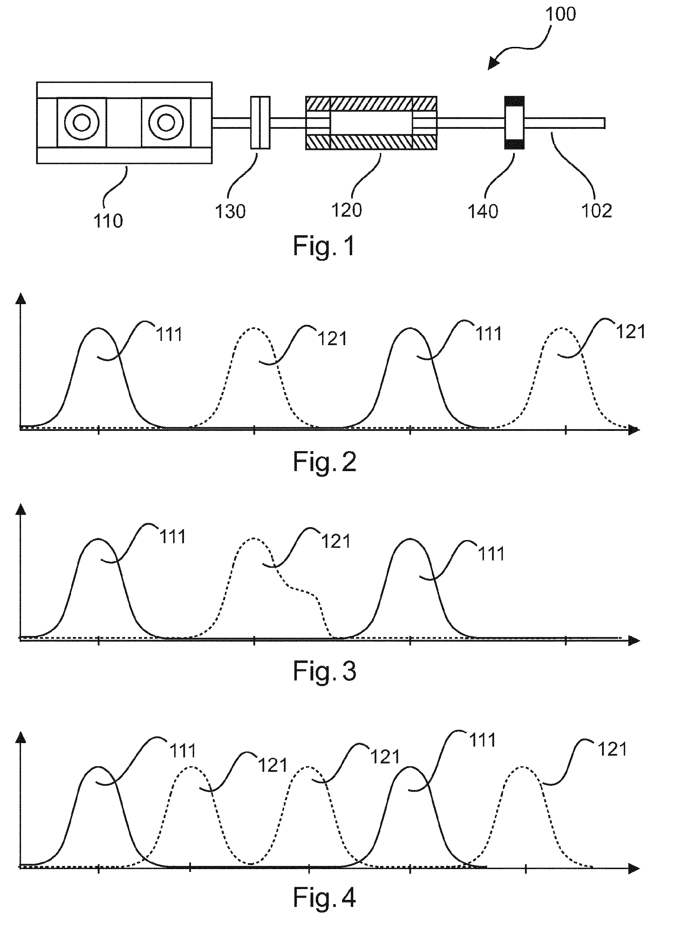

Fig. 1 shows a drive train 100 with a combustion engine 110, which is connected to an electrical engine 120 by a torsional stiff module clutch 130. Behind these two engines, an oscillations reducer 140, e.g. a two mass flywheel is attached to the drive train 100. All components are connected by a shaft 102, which is the means for transmission of torque between the engines 110, 120 to eventually the tires.

Fig. 2 shows a time history of the torque pulses 111, 121 of both engines 110, 120. First, a torque pulse 111 generated by the combustion engine 110 is shown. It is followed by a torque pulse 121 generated by the electrical engine 120. After this, again a torque pulse 111 generated by the combustion engine 110 appears. Then again, a torque pulse 121 generated by the electrical engine 120 is provided. Thus, alternating torque pulses 121, 111 by the electrical engine 120 and the combustion engine 110 are provided. The shape of the respective pulses 121, 111 is approximately the same.

Fig. 3 shows a time history of the torque pulses 121, 111 of both engines 120, 110. Fig. 3 is based on Fig. 2, however, the torque pulse 121 generated by the electrical engine 120 does not exactly have the same shape as the torque pulse 111 generated by the combustion engine 110. The torque pulse 121 generated by the electrical engine 120 is provided with additional tuning signals to increase the figure of merit or to compensate for negative torque of the combustion engine 110, e.g. when removing exhaust air from the cylinder.

Fig. 4 shows a time history of the torque pulses 121, 111 of both engines 120, 110, wherein in contrast to Fig. 3 and Fig. 2 two torque pulses 121 are generated by the electrical engine 120 between two torque pulses 111 generated by the combustion engine 110. Hence, the frequency of torque pulses 121, 111 has tripled compared to the frequency of the torque pulses 111 generated by the combustion engine 110 alone.

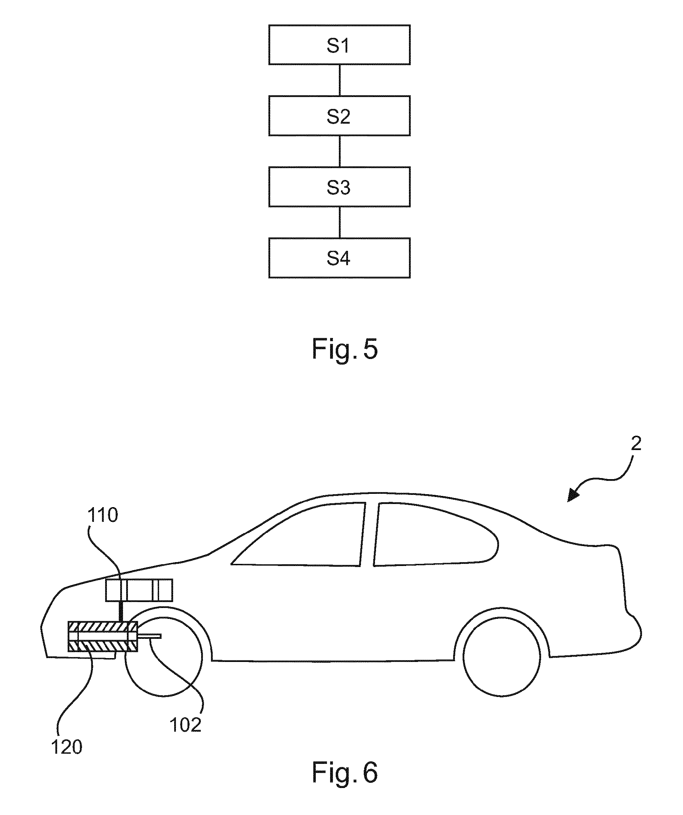

Fig. 5 shows a method for reducing torsional oscillations in a vehicle drive train 100 of a vehicle 2. The first step is identifying (S1) the frequency and/or shape of at least one torque pulse 111 of the combustion engine 110; Next, the electrical engine 120 is operated S2 in intervals 121, such that at least one interval 121 of the electrical engine 120 is allocated chronologically between two torque intervals 111 of the combustion engine 110. After that, resembling S3 the shape of the torque interval 111 of the combustion engine 110 with the shape of the torque interval 121 of the electrical engine 120 is conducted; finally, a tuning signal is added S4 to the torque interval 121 of the electrical engine 120.

Fig. 6 shows a vehicle 2 with a combustion engine 110, an electrical engine 120 and a shaft 102 for the transmission of torque, according to an exemplary embodiment of the present invention.

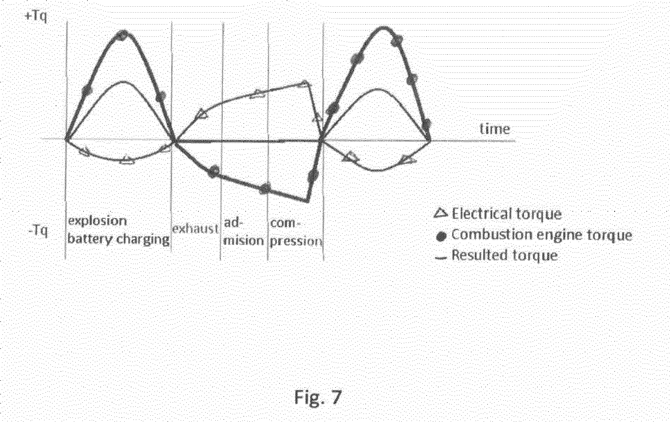

Fig. 7 relates to an example, in which the electrical engine is capable of playing the role of an electrical generator during the torque pulses of the combustion engine, thus adding negative torque during this interval. The torque of the combustion engine is indicated with circles, the torque of the electrical engine is indicated with triangles and the resulting torque (sum of both previous torque values) is indicated as a mere line. The torque values are plotted against time on the horizontal axis. Between the torque pulses of the combustion engine, in which the combustion engine applies or adds negative torque to the shaft due to friction and exhaust processes, the electrical engine provides positive torque for compensating for the negative torque applied by the combustion engine. Hence, a net negative torque can be eschewed and the net torque (sum of torque of combustion and electrical engine) can always be greater than or equal to zero. This can be seen as virtually doubling the number of cylinders, however, with the additional cylinder being much less powerful.

### Reference Signs

- 2: Vehicle
- 100: Drive train
- 102: Shaft
- 110: Combustion engine
- 111: Torque pulse of the combustion engine
- 120: Electrical engine
- 121: Torque pulse of the electrical engine
- 130: Module clutch
- 140: Oscillation reducer
- S1: Identifying
- S2: Operating
- S3: Resembling
- S4: Adding

## Claims

1. System for reducing torsional oscillations in a vehicle drive train (100) of a hybrid vehicle (2), the system comprising:
a combustion engine (110),
an electrical engine (120),
a vehicle drive train (100) being coupled to the combustion engine (110) and the electrical engine (120),
wherein the combustion engine (110) is configured to generate a first series of torque pulses (111) and the electrical engine (120) is configured to generate a second series of torque pulses (121),
wherein the torque pulses (111) of the combustion engine (110) and the torque pulses (121) of the electrical engine (120) are applied to the drive train (100) and are directed in the same sense of direction, and
wherein at least one torque pulse (121) generated by the electrical engine (120) is generated chronologically between two subsequent torque pulses (111) of the combustion engine (110).

2. System according to claim 1,
wherein a shape of the torque pulses (121) generated by the electrical engine (120) corresponds to a shape of the torque pulses (111) generated by the combustion engine (110).

3. System according to claim 1,
wherein a shape of the torque pulses (121) generated by the electrical engine (120) corresponds to a shape of the torque pulses (111) generated by the combustion engine (110) augmented by a tuning signal.

4. System according to one of the preceding claims,
wherein all torque pulses (111, 121) generated by the electrical engine (120) and generated by the combustion engine (110) are equidistantly distributed.

5. System according to one of the preceding claims, further comprising:
a module clutch (130),
wherein the module clutch (130) is arranged between the combustion engine (110) and the electrical engine (120).

6. System according to claim 5,
wherein the module clutch (130) is torsional stiff.

7. System according to one of the preceding claims, further comprising:
a torsional oscillation reducer (140),
wherein the torsional oscillation reducer (140) is arranged at a shaft (102) of the drive train (100) behind the electrical engine (120) and the combustion engine (110).

8. System according to claim 7,
wherein the torsional oscillation reducer (140) is a two mass flywheel.

9. System according to one of the preceding claims,
wherein the combustion engine (110) is a piston engine and wherein the piston engine has one, two, or three cylinders.

10. System according to one of the preceding claims, wherein the electrical engine (120) is adapted to generate torque in order to perform or at least support the compression phase in the cylinder in a steady state of the combustion engine (110).

11. System according to one of the preceding claims,
wherein the torque pulses (111) generated by the combustion engine (110) are proportioned to the drive train (100) and the electrical engine (120), and
wherein the electrical engine (120) generates electricity from these torque pulses (111).

12. System according to one of the preceding claims,
wherein the first series of torque pulses (111) has the same frequency as the second series of torque pulses (121), such that an excitation frequency acting on the drive train (100) corresponds to an excitation frequency generated by the combustion engine (110) with at least twice the number of cylinders as the combustion engine (110) of the hybrid vehicle (2).

13. Method for reducing torsional oscillations in a vehicle drive train (100), comprising the steps of:
- Identifying (S1) the frequency and/or shape of at least one torque pulse (111) of the combustion engine (110);
- Operating (S2) the electrical engine (120) in pulses (121), such that at least one pulse (121) of the electrical engine (120) is allocated chronologically between two torque pulses (111) of the combustion engine (110).

14. Method according to claim 13, further comprising the steps of:
- Resembling (S3) the shape of the torque pulse (111) of the combustion engine (110) with the shape of the torque pulse (121) of the electrical engine (120); and
- Adding (S4) a tuning signal to the torque pulse (121) of the electrical engine (120).

15. Vehicle (2) comprising a system according to one of the claims 1 to 11.
